# EUROPEAN PATENT SPECIFICATION

(11) **EP 4 205 936 B1**
(45) Date of publication and mention of the grant of the patent: **10.12.2025**
(21) Application number: 21218060.8
(22) Date of filing: 29.12.2021
(51) Int. Cl.: B29B 17/04, B29L 30/00

(54) **PROCESS FOR OBTAINING DEVULCANIZED RUBBER DUST**
VERFAHREN ZUR HERSTELLUNG VON ENTVULKANISIERTEM GUMMISTAUB
PROCÉDÉ D'OBTENTION DE POUSSIÈRE DE CAOUTCHOUC DÉVULCANISÉE

(43) Date of publication of application: 05.07.2023
(73) Proprietor: VERTECH ENGINEERING & TECHNOLOGY S.R.L., 20154 Milano (MI) (IT)
(72) Inventor: VERRI, Tommaso, 20154 Milano (IT)
(74) Representative: Simino, Massimo

(56) References cited:
- WO-A1-2012/127510
- WO-A1-92/15438
- CN-Y- 200 988 284
- FR-A1- 2 882 678

## Description

The present invention relates to a mechanical working process for obtaining devulcanized rubber dust, particularly of a devulcanized rubber obtained by recycling a vulcanized rubber layer.

In the context of the present invention the term rubber is used to indicate a natural rubber and/or a synthetic rubber.

It is well known that vulcanization is a process used to give the rubber particular characteristics that make it suitable for specific uses.

In this regard, just take into account the tires to consider how they are formed by a support structure, generally made of steel, covered with one or more vulcanized rubber layers.

The description below will be arranged, by way of example but not limited to, with reference to a vulcanized rubber layer of a tire, in particular a vulcanized rubber layer constituting the tire tread.

In relation to tires, it is known that their disposal at the end of their useful life is a rather serious problem, since the disposal in incinerators and the like is completely undesirable from the point of view of environmental pollution.

Moreover, the steel-rubber composite material of the tires makes the disposal of old tires particularly problematic, as well as economically very costly.

It is therefore evident that today the need to be able to meet the aforementioned need to dispose of tires in an efficient and inexpensive way is very important.
Documents FR 2 882 678 A1, CN 200 988 284 Y and WO 92/15438 A1 disclose apparatuses and/or processes for producing rubber powder from waste tyres based on the water jet technology, they are silent about the devulcanization of the rubber processed.

According to a further embodiment, nowadays the need to be able to dispose of a vulcanized rubber in an effective and not very costly manner is also important, preferably obtaining a devulcanized rubber to be reused as raw material, pure or mixed with other materials, in production processes involving the use of rubber to be subjected to a vulcanization process.

Document WO 2012/127510 A1 relates to a devulcanized rubber granule, a water jet treatment method and the use of such method for devulcanizing vulcanized rubber based on different steps.

The problem underlying the present invention is that of devising a process for obtaining devulcanized rubber dust, at least partially devulcanized rubber, having structural and functional features such as to meet the aforementioned requirements.

This problem is solved by a mechanical working process for obtaining devulcanized rubber dust from a vulcanized rubber in accordance with claim 1.

According to a further aspect, this problem is also solved by a process according to claim 5 for the disposal of tires comprising a layer of vulcanized rubber.

Further features and advantages of the mechanical working process for obtaining devulcanized rubber dust according to the present invention will become clear from the following description of some of its preferred embodiments.

According to the invention, the mechanical working process involves obtaining devulcanized rubber dust starting from a vulcanized rubber layer, wherein preferably said vulcanized rubber layer constitutes the tread of a tire and/or the side of a tire.

Therefore, the mechanical working process according to the invention is particularly suitable as a process for the disposal of tires, by subjecting the vulcanized rubber layer of the tires to be disposed of to the working process according to the present invention.

According to the invention, the mechanical working process for obtaining devulcanized rubber comprises the steps of:
- providing an item with a vulcanized rubber layer, for example, the tread or a side of a tire and
- subjecting said vulcanized rubber layer to a mechanical high-pressure water jet dust crumbling treatment performed by directing jets of a high-pressure water jet head against said vulcanized rubber layer.

In fact, following the test of various methods and of repeated tests carried out, the owner of the present invention was able to ascertain that the use of the aforementioned treatment of the vulcanized rubber layer by high pressure water jet treatment not only allows the crumbling of the layer of rubber, for example, allowing to selectively remove the rubber from the steel casing of the tires, but even comes to act on the structure of the vulcanized rubber with pressures and stresses such as to determine a devulcanization of the treated rubber.

According to the present invention the above mechanical working process carried out by means of an apparatus for obtaining devulcanized rubber dust is carried out using as working tool a water jet rotating head suitable for addressing against a layer of vulcanized rubber to be devulcanized water jets having a pressure ranging from 1,200 bar to 3,400 bar.

According to a preferred embodiment, the aforementioned water jets are emitted by a rotating high pressure water jet head and have a pressure ranging from 1,800 bar and 2,800 bar.

The rotation speed of said rotating high-pressure water jet head is between 1,800 rpm (hereinafter referred to as rpm) and 2,600 rpm.

The rotating high-pressure water jet head moves along the surface of the vulcanized rubber layer being processed with a translation speed from 1.1 m/min to 1.9 m/min.

The aforementioned rotating high-pressure water jet head is spaced from the vulcanized rubber layer to be crumbled so that the jets ejected by the high-pressure water jet head travel a section having a length between 1.8 mm and 2.6 mm, preferably a section between 2.0 and 2.4 mm, before impacting against the surface of the layer to be crumbled.

According to a preferred embodiment, the aforementioned vulcanized rubber layer comprises at least 70% of natural rubber, preferably comprising at least 90% of natural rubber, more preferably consist of natural rubber.

Preferably, the working process according to the invention comprises a cleaning step, preferably a cleaning and/or rubbing step, of said vulcanized rubber layer before subjecting said vulcanized rubber layer to said high pressure water jet dust crumbling treatment.

The working process according to the invention comprises a drying step and a screening step of the dust obtained.

As can be appreciated from what has been described, the working process for obtaining devulcanized rubber according to the present invention enables the aforementioned requirements to be achieved, allowing to obtain dust of devulcanized rubber, even almost entirely, to be reused as raw material, pure or mixed with other materials or with another type of virgin rubber, that is never before subjected to a vulcanization process, in processes in which rubber is used to be subjected to a vulcanization process.

Obviously, a person skilled in the art, in order to meet contingent and specific needs, may make numerous changes and amendments to the process according to the invention described above, all however contained within the scope of the invention as defined by the following claims.

## Claims

1. **Mechanical working process for obtaining devulcanized rubber dust** from a vulcanized rubber, comprising the step of:
- providing an item with a vulcanized rubber layer and
- providing an apparatus for obtaining devulcanized rubber dust comprising as working tools a high-pressure water jet rotating head suitable for addressing against a layer of vulcanized rubber to be devulcanized water jets, wherein said high-pressure water jet rotating head:
• has a rotational speed ranging from 1,800 rpm and 2,600 rpm;
• moves along a surface of said vulcanized rubber layer with a translation speed ranging from 1.1 m/min to 1.9 m/min;
• ejects water jets having a pressure ranging from 1,200 bar to 3,400 bar and
• is spaced from the vulcanized rubber layer to be crumbled so that the water jets ejected by the high-pressure water jet head travel a section having a length between 1.8 mm and 2.6 mm before impacting against the surface of the layer to be crumbled, so that said vulcanized rubber layer is devulcanized subjected to said high-pressure water jet dust crumbling mechanical treatment performed by addressing against said layer to be devulcanized said water jets ejected from said high-pressure water jet rotating head, said process further comprising a screening step and a drying step of the devulcanized dust obtained.

2. Process according to claim 1, wherein said jets have a pressure ranging from 1,800 bar to 2,800 bar.

3. Process according to claim 1 or 2, wherein said rotating high pressure water jet head is spaced from said vulcanized rubber layer to be crumbled so that said jets ejected by said rotating high pressure water jet head travel a section having a length between 2.0 and 2.4 mm before impacting against the surface of the layer to be crumbled.

4. Process according to any one of claims 1 to 3, wherein the vulcanized rubber layer is the tread of a tire and/or the side of a tire and comprises at least 70% of natural rubber, preferably comprising at least 90% of natural rubber, more preferably consist of natural rubber

5. **Process for the disposal of tires comprising a layer of vulcanized rubber, characterized in that** said vulcanized rubber layer of said tires is subjected to a mechanical working process according to any one of the claims from 1 to 4.

## Patentansprüche

1. **Mechanisches Bearbeitungsverfahren zur Gewinnung von devulkanisiertem Gummistaub** aus einem vulkanisierten Gummi, umfassend den Schritt:
- Bereitstellen eines Gegenstands mit einer vulkanisierten Gummischicht und
- Bereitstellen einer Vorrichtung zur Gewinnung von devulkanisiertem Gummistaub, die als Arbeitswerkzeuge einen Hochdruckwasserstrahldrehkopf umfasst, der geeignet ist, Wasserstrahlen gegen eine Schicht aus vulkanisiertem Gummi, die zu devulkanisieren ist, zu richten,
wobei der Hochdruckwasserstrahldrehkopf:
• eine Drehzahl im Bereich von 1.800 U/min und 2.600 U/min aufweist;
• sich entlang einer Oberfläche der vulkanisierten Gummischicht mit einer Translationsgeschwindigkeit im Bereich von 1,1 m/min bis 1,9 m/min bewegt;
• Wasserstrahlen mit einem Druck im Bereich von 1.200 bar bis 3.400 bar ausstößt und
• von der zu zermahlenden vulkanisierten Gummischicht so beabstandet ist, dass die vom Hochdruckwasserstrahlkopf ausgestoßenen Wasserstrahlen eine Strecke mit einer Länge zwischen 1,8 mm und 2,6 mm zurücklegen, bevor sie auf die Oberfläche der zu zermahlenden Schicht auftreffen,
so dass die vulkanisierte Gummischicht devulkanisiert wird, indem sie der mechanischen Behandlung zur Zermahlung zu Staub durch Hochdruckwasserstrahlen unterzogen wird, die dadurch durchgeführt wird, dass die Wasserstrahlen, die von dem Hochdruckwasserstrahldrehkopf ausgestoßen werden, gegen die zu devulkanisierende Schicht gerichtet werden,
wobei das Verfahren ferner einen Siebschritt und einen Trocknungsschritt des gewonnenen devulkanisierten Staubes umfasst.

2. Verfahren nach Anspruch 1, wobei die Strahlen einen Druck im Bereich von 1.800 bar bis 2.800 bar aufweisen.

3. Verfahren nach Anspruch 1 oder 2, wobei der Hochdruckwasserstrahldrehkopf von der zu zermahlenden vulkanisierten Gummischicht beabstandet ist, so dass die von dem Hochdruckwasserstrahldrehkopf ausgestoßenen Strahlen eine Strecke mit einer Länge zwischen 2,0 und 2,4 mm zurücklegen, bevor sie auf die Oberfläche der zu zermahlenden Schicht auftreffen.

4. Verfahren nach einem der Ansprüche 1 bis 3, wobei die vulkanisierte Gummischicht die Lauffläche eines Reifens und/oder die Seite eines Reifens ist und mindestens 70 % Naturkautschuk umfasst, bevorzugt mindestens 90 % Naturkautschuk umfasst, bevorzugter aus Naturkautschuk besteht.

5. **Verfahren zur Entsorgung von Reifen mit einer Schicht aus vulkanisiertem Gummi, dadurch gekennzeichnet, dass** die vulkanisierte Gummischicht der Reifen einem mechanischen Bearbeitungsverfahren nach einem der Ansprüche 1 bis 4 unterzogen wird.

## Revendications

1. **Procédé de travail mécanique pour obtenir de la poussière de caoutchouc dévulcanisée** à partir d'un caoutchouc vulcanisé, comprenant l'étape suivante :
- fournir un article avec une couche de caoutchouc vulcanisé et
- fournir un appareil pour obtenir de la poussière de caoutchouc dévulcanisée comprenant comme outils de travail une tête rotative de jet d'eau à haute pression adaptée à l'adressage contre une couche de caoutchouc vulcanisé à dévulcaniser des jets d'eau,
dans lequel ladite tête rotative à jet d'eau à haute pression :
• a une vitesse de rotation comprise entre 1 800 tr/min et 2 600 tr/min ;
• se déplace le long d'une surface de ladite couche de caoutchouc vulcanisé à une vitesse de translation comprise entre 1,1 m/min et 1,9 m/min ;
• éjecte des jets d'eau dont la pression est comprise entre 1 200 et 3 400 bars et
• est espacé de la couche de caoutchouc vulcanisé à émietter de sorte que les jets d'eau éjectés par la tête à jet d'eau à haute pression parcourent une section d'une longueur comprise entre 1,8 mm et 2,6 mm avant d'impacter la surface de la couche à émietter,
de sorte que ladite couche de caoutchouc vulcanisé soit dévulcanisée soumise audit traitement mécanique d'émiettement des poussières par jet d'eau à haute pression effectué en adressant contre ladite couche à dévulcaniser lesdits jets d'eau éjectés par ladite tête rotative à jet d'eau à haute pression,
ledit procédé comprenant en outre une étape de criblage et une étape de séchage de la poussière dévulcanisée obtenue.

2. Procédé selon la revendication 1, dans lequel lesdits jets ont une pression comprise entre 1 800 bars et 2 800 bars.

3. Procédé selon la revendication 1 ou 2, dans lequel ladite tête rotative à jet d'eau à haute pression est espacée de ladite couche de caoutchouc vulcanisé à émietter de sorte que lesdits jets éjectés par ladite tête rotative à jet d'eau à haute pression parcourent une section d'une longueur comprise entre 2,0 et 2,4 mm avant d'impacter la surface de la couche à émietter.

4. Procédé selon l'une quelconque des revendications 1 à 3, dans lequel la couche de caoutchouc vulcanisé est la bande de roulement d'un pneu et/ou le flanc d'un pneu et comprend au moins 70 % de caoutchouc naturel, de préférence comprenant au moins 90 % de caoutchouc naturel, plus préférentiellement est constituée de caoutchouc naturel.

5. **Procédé d'élimination de pneus comprenant une couche de caoutchouc vulcanisé, caractérisé en ce que** ladite couche de caoutchouc vulcanisé desdits pneus est soumise à un procédé de travail mécanique selon l'une quelconque des revendications de 1 à 4.
